# EUROPÄISCHE PATENTSCHRIFT

(11) **EP 1 559 300 B1**
(45) Veröffentlichungstag und Bekanntmachung des Hinweises auf die Patenterteilung: **14.06.2006**
(21) Anmeldenummer: 03769262.1
(22) Anmeldetag: 27.08.2003
(51) Int. Cl.: H05B 41/42

(54) **ANSTEUEREINRICHTUNG FÜR LEUCHTSTOFFRÖHREN**
CONTROL SYSTEM FOR LIGHT TUBES
SYSTEME DE COMMANDE POUR TUBES FLUORESCENTS

(30) Priorität: 28.08.2002 DE 10239370
(43) Veröffentlichungstag der Anmeldung: 03.08.2005
(73) Patentinhaber: Harman/Becker Automotive Systems GmbH, 76307 Karlsbad (DE)
(72) Erfinder: SCHANZ, Christian, 76776 Neuburg (DE); RUPPRECHT, Matthias, 75344 Straubenhardt (DE)
(74) Vertreter: Schmuckermaier, Bernhard
(86) Internationale Anmeldenummer: PCT/EP2003/009481
(87) Internationale Veröffentlichungsnummer: WO 2004/026006

(56) Entgegenhaltungen:
- US-A- 6 104 146
- US-B1- 6 351 074
- DATASHEET: "LT1768 - High Power CCFL Controller for Wide Dimming Range and Maximum Lamp Lifetime" LINEAR TECHNOLOGY CORPORATION, 2000, Seiten 1-20, XP002269511 in der Anmeldung erwähnt

## Beschreibung

Die Erfindung bezieht sich auf eine Ansteuereinrichtung für mindestens zwei an eine gemeinsame Transformatorschaltung angeschlossene Leuchtstoffröhren, wobei die Ansteuereinrichtung mindestens aufweist: einen Steuerschaltkreis mit mindestens zwei Detektionseingängen, wobei in einem Tagmodus jeder Detektionseingang zur Detektion des Lampenstroms einer angeschlossenen Leuchtstoffröhre vorgesehen ist, wobei die Lampenströme durch den Steuerschaltkreis in dem Tagmodus mit höheren Stromstärken und in einem Nachtmodus mit niedrigeren Stromstärken einstellbar sind, wobei die Lampenströme in dem Tagmodus getrennt voneinander detektierbar sind.

Eine derartige Ansteuereinrichtung ist beispielsweise aus Linear Technology Corporation, Datasheet: "LT1768 - High Power CCFL Controller for Wide Dimming Range and Maximum Lamp Lifetime", 2000 zu ersehen.

Die Erfindung bezieht sich außerdem auf ein Verfahren zum Betreiben einer Lampenschaltung, wobei in einem Tagmodus die durch die Leuchtstoffröhren fließenden Lampenströme getrennt detektiert und eingestellt werden.

Anzeigen von Multimediasystemen werden z. T. mit Hilfe von Leuchtstoffröhren beleuchtet. Hierbei werden z. T. mehrere Röhren verwendet, insbesondere für höhere Lichtleistungen bei begrenzter maximal zulässiger Lichtleistung einer einzelnen Leuchtstoffröhre. Zum Betreiben der Leuchtstoffröhren ist eine spezielle Ansteuerelektronik erforderlich. Aus Kostengründen werden zum Teil zwei parallel geschaltete Leuchtstoffröhren an einer Ansteuerung und mit einer Transformatorschaltung betrieben.

Aufgrund von Toleranzen in der Charakteristik der Leuchtstoffröhren kann es zu Fehlern kommen. Dabei verteilt sich der von der Ansteuerung vorgegebene Strom nicht gleichmäßig auf die parallel geschalteten Leuchtstoffröhren. Diese haben einen negativen Innenwiderstand, d. h., dass bei minimalem Lampenstrom die maximale Brennspannung auftritt. Eine Parallelschaltung führt somit zu einem instabilen System, bei dem ggf. der Strom vollständig durch eine Leuchtstoffröhre mit geringem Widerstand fließt und die andere Leuchtstoffröhre stromlos sperrt. Durch in Reihe geschaltete Ballastwiderstände bzw.-impedanzen können die Lampenströme bei hinreichenden Stromstärken symmetrisch gehalten werden, da die Ballastwiderstände das Spannungsteilerverhältnis und somit wiederum die Ströme in den beiden Zweigen. bestimmen. Bei geringeren Stromstärken ist der Spannungsabfall an den Ballastwiderständen jedoch so gering, dass der Spannungsteiler durch den nun relativ hohen Lampenwiderstand bestimmt wird. Die Schaltung kann bereits bei geringen Streukapazitäten asymmetrisch werden, wodurch ggf. eine Lampe vollständig ausgehen kann. Die Steuerschaltung - z. B. ein Controller-IC - kann dies zwar als Unterschreiten eines vorgegebenen Mindeststromwertes registrieren und zur erneuten Zündung der Lampe den Lampenstrom - z. B. in einem Fault-Modus bzw. Fehler-Modus - reduzieren und in einem nachfolgenden Burst-Modus die Lampe wieder zünden. Bei anhaltend geringer Stromstärke durch diese Lampe kann sich dieses Verhalten jedoch wiederholen, so dass die Lampe flackert. Bei geringer Einstellung der Helligkeit - d. h. einer hohen Dimmrate - kann somit ein Flackern der Anzeigenhelligkeit auftreten.

Der Erfindung liegt die Aufgabe zugrunde, eine Ansteuerschaltung für Leuchtstoffröhren zu schaffen, die mit relativ geringem Aufwand ein instabiles Verhalten, insbesondere Flackern der Lampen, verhindert.

Diese Aufgabe wird durch eine Ansteuereinrichtung nach Anspruch 1 gelöst. Die Unteransprüche beschreiben bevorzugte Weiterbildungen. Hierbei wird insbesondere eine Treiberschaltung nach Anspruch 5 und eine Lampenschaltung nach Anspruch 6 geschaffen.

Die Aufgabe wird weiterhin durch ein Verfahren nach Anspruch 7 gelöst.

Erfindungsgemäß wird somit der Einstellbereich bzw. Dimmbereich der Lampenströme in einen helleren Bereich (Tagmodus) und einen dunkleren Bereich (Nachtmodus) unterteilt. Die Detektion der Lampenströme erfolgt durch eine geeignete, als solche grundsätzlich bereits bekannte Steuerschaltung, z. B. einen integrierten Controller wie denLT1768, mit entsprechenden Detektionseingängen.

In dem Nachtmodus werden die Lampenströme gemeinsam ausgewertet. Die gemeinsame Auswertung kann insbesondere durch eine Verbindung der beiden Detektionseingänge über einen Schalter erfolgen. Dies hat zur Folge, dass bei asymmetrischem Verhalten der Leuchtstoffröhren keiner der Detektionseingänge einen so schwachen Strom erkennt, dass dieser Strom weiter reduziert wird. Die beiden Röhren leuchten somit mit konstanter, geringer Helligkeit, wobei eventuelle Asymmetrien aufgrund der geringeren Stromstärken nicht zur Zerstörung einer Leuchtstoffröhre führen. Im Tagmodus mit höheren Stromstärken erfolgt erfindungsgemäß eine getrennte Auswertung und Einstellung der Ströme.

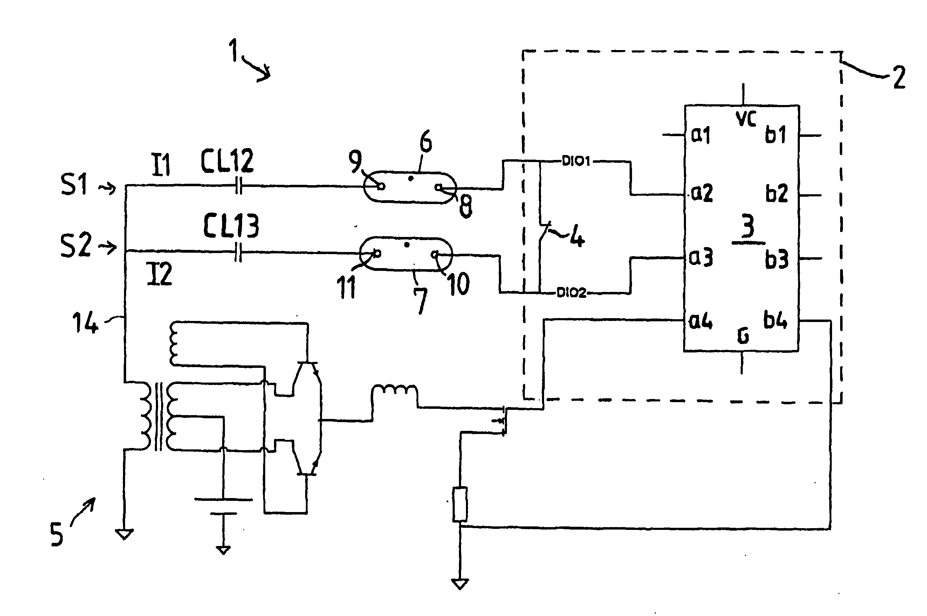

Die Erfindung wird im folgenden anhand der beiliegenden Zeichnungen an einer Ausführungsform näher erläutert. Die Figur zeigt ein Blockschaltbild einer Lampenschaltung.

Eine Lampenschaltung 1 weist eine Ansteuereinrichtung 2 mit einem geeigneten Steuerschaltkreis 3, z. B. einem Controller-IC, auf. Ein derartiger Controller-IC ist z. B. unter der Bezeichnung LT1768 erhältlich. In der Ansteuereinrichtung 2 ist weiterhin zwischen Detektionseingängen a2, a3 bzw. den angeschlossenen Leitungen DIO1 und DIO2 ein Schalter 4 vorgesehen, der z. B. als Halbleiterschalter ausgeführt sein kann und in einem Tagmodus offen und in einem Nachtmodus geschlossen ist.

An die Leitungen DIO1 und DIO2 sind Anschlusskontakte 8 bzw. 10 von Leuchtstoffröhren 6 bzw. 7 angeschlossen. An die weiteren Anschlusskontakte 9 bzw. 11 der Leuchtstoffröhren 6 bzw. 7 sind Ballastkondensatoren CL12 bzw. CL13 angeschlossen, so dass zwei parallele, symmetrische Strompfade S1 und S2 gebildet werden. Die Strompfade S1, S2 sind über eine gemeinsame Anschlussleitung 14 verbunden und an eine als solche bekannte Transformatorschaltung 5 angeschlossen.

Der Steuerschaltkreis 3 detektiert die über die Detektionseingänge a2 und a3 eingehenden Ströme und stellt geeignete Lampenströme ein. Im Tagmodus mit höheren Stromstärken fließen die Lampenströme I1, I2 jeweils in den entsprechenden Eingang a2 bzw. a3, so dass sie separat detektiert und eingestellt werden können. Im Nachtmodus mit niedrigeren Stromstärken und geschlossenem Schalter 4 können die Lampenströme I1, I2 von beiden Eingängen a2, a3 detektiert werden. Die an den Strompfaden S1 und S2 abfallende Spannung fällt bei den kleinen Stromstärken im wesentlichen an den Leuchtstoffröhren 6 bzw. 7 ab. Bei stärker unsymmetrischen Verhalten, bei dem z. B. durch die Röhre 6 ein geringerer Strom I1 fließt, nimmt a2 - wie a3 - somit dennoch beide Ströme I1 und I2 bzw. einen Teil der Summe beider Ströme auf. Somit wird verhindert, dass in a2 ein Versagen der Röhre 6 erkannt und der Lampenstrom I1 weiter reduziert wird, um anschließend in einem Burst-Zyklus die Röhre 6 wieder zu zünden. Somit wird im Nachtmodus ein periodisches Reduzieren und wieder Anschalten des Stromes der schwächer leuchtenden Röhre vermieden und ein gleichmäßiges - ggf. unsymmetrisches - Leuchten erreicht.

### Bezugszeichenliste

- 1: Lampenschaltung
- 2: Ansteuereinrichtung
- 3.: Steuerschaltkreis
- 4.: Schalter
- 5.: Transformatorschaltung
- 6.: Leuchtstoffröhre
- 7.: Leuchtstoffröhre
- 8.: Anschlusskontakt
- 9.: Anschlusskontakt
- 10.: Anschlusskontakt
- 11.: Anschlusskontakt
- 14.: Anschlussleitung
- CL12: Ballastkondensator
- CL13: Ballastkondensator
- a1-4, b1-4: Eingänge von 3
- G: Masseanschluss von 3
- VC: Betriebspannungseingang von 3

## Patentansprüche

1. Ansteuereinrichtung für mindestens zwei an eine gemeinsame Transformatorschaltung (5) angeschlossene Leuchtstoffröhren (6, 7), wobei die Ansteuereinrichtung (2) mindestens aufweist:
einen Steuerschaltkreis (3) mit mindestens zwei Detektionseingängen (a2, a3),
wobei in einem Tagmodus jeder Detektionseingang (a2, a3) zur Detektion des Lampenstroms einer angeschlossenen Leuchtstoffröhre vorgesehen ist, wobei die Lampenströme(Il,12) durch den Steuerschaltkreis (3) in dem Tagmodus mit höheren Stromstärken und in einem Nachtmodus mit niedrigeren Stromstärken einstellbar sind,
wobei die Lampenströme (Il, I2) in dem Tagmodus getrennt voneinander detektierbar sind, **dadurch gekennzeichnet, dass** die Lampenströme (I1, I2) in dem Nachtmodus gemeinsam detektierbar sind, wobei die gemeinsame Detektion in dem Nachtmodus **dadurch** erreicht wird, dass die Lampenströme (I1, I2) über Schaltmittel (4) zusammenschaltbar sind.

2. Ansteuereinrichtung nach Anspruch1, **dadurch gekennzeichnet, dass** zwischen den beiden Detektionseingängen (a2, a3) ein Schaltmittel (4) vorgesehen ist, durch das die beiden Detektionseingänge (a2, a3) im Nachtmodus verbunden sind zur gemeinsamen Auswertung der Lampenströme (I1, I2) durch die beiden Detektionseingänge und im Tagmodus getrennt sind zur getrennten Auswertung jedes Lampenstroms durch einen Detektionseingang.

3. Ansteuereinrichtung nach Anspruch 1 oder 2, **dadurch gekennzeichnet, dass** der Steuerschaltkreis (3) einen Lampenstrom (I1, I2) bei Detektion eines Unterschreitens eines Mindeststromwertes absenkt und einen Burstmodus zur Einleitung einer Zündung einleitet.

4. Ansteuereinrichtung nach einem der vorherigen Ansprüche, **dadurch gekennzeichnet, dass** der Steuerschaltkreis (3) integriert ist.

5. Treiberschaltung für mindestens zwei Leuchtstoffröhren (6, 7), mit einer Ansteuereinrichtung (2) nach einem der vorherigen
Ansprüche zum Anschluss an erste Anschlusskontakte (8, 10) der Leuchtstoffröhren, zwei Impedanzen, vorzugsweise Kondensatoren (CL12, CL13), die an zweite Anschlusskontakte (9, 11) der
Leuchtstoffröhren (6, 7) zur Ausbildung von Spannungsteilerschaltungen anschließbar sind, und einer Transformatorschaltung (5), die mit den Impedanzen über eine gemeinsamen Anschlussleitung (14) verbunden ist.

6. Lampenschaltung (1) mit einer Treiberschaltung (2,5,CL12,CL13) nach Anspruch 5 und zwei angeschlossenen Leuchtstoffröhren (6, 7).

7. Verfahren zum Betreiben einer Lampenschaltung nach Anspruch 6,
wobei in einem Tagmodus die durch die
Leuchtstoffröhren (6, 7) fließenden Lampenströme (I1, I2) getrennt detektiert und eingestellt werden, **dadurch gekennzeichnet, dass** in einem Nachtmodus die Lampenströme gemeinsam detektiert und eingestellt werden, wobei die gemeinsame Detektion in dem Nachtmodus **dadurch** erreicht wird, dass die Lampenströme (I1, I2) zusammengeschaltet werden.

## Claims

1. A control device for at least two fluorescent tubes (6, 7) connected to a common transformer circuit (5), the control device (2) including at least the following:
a control circuit (3) with at least two detection inputs (a2, a3),
whereby, in a daytime mode, each detection input (a2, a3) is provided for detecting the lamp current of a fluorescent tube connected to it, the lamp currents (I1, I2) being controllable by the control circuit (3), in the daytime mode, with relatively high currents and, in a nighttime mode, with relatively low currents,
whereby the lamp currents (I1 I2) may be detected, in the daytime mode, separately from one another, **characterised in that** the lamp currents (I1, I2) are detectable together in the nighttime mode, the common detection in the nighttime mode being achieved by the fact that the lamp currents (I1, I2) may be switched together by switching means (4).

2. A control device as claimed in Claim 1, **characterised in that** provided between the two detection inputs (a2, a3) there is switching means (4), by which the two detection inputs (a2, a3) are connected in the nighttime mode for the common evaluation of the lamp currents (I1, I2) by the two detection inputs and are isolated in the daytime mode for separate evaluation of each lamp current by a detection input.

3. A control device as claimed in Claim 1 or 2, **characterised in that** the control circuit (3) reduces the lamp current (I1, I2) on detecting that the current has, fallen below a minimum current value, and initiates a burst mode for initiation of firing.

4. A control device as claimed in one of the preceding claims, **characterised in that** the control circuit (3) is integrated.

5. A driver circuit for at least two fluorescent tubes (6, 7) including a control device as claimed in one of the preceding claims for connecting to a first connecting contact (8, 10) of the fluorescent tubes, two impedances, preferably capacitors (CL12, CL13) which are connectable to a second connection contact (9, 11) of the fluorescent tubes for forming voltage divider circuits and a transformer circuit (5), which is connected to the impedances via a common connecting line (14).

6. A lamp circuit (1) with a driver circuit (2, 5, CL12, CL13) as claimed in Claim 5 and two fluorescent tubes (6, 7) connected thereto.

7. A method of operating a lamp circuit as claimed in Claim 6, wherein the lamp currents (I1, I2) flowing through the fluorescent tubes (6, 7) are detected and adjusted separately in a daytime mode, **characterised in that**, in a nighttime mode, the lamp currents are detected and adjusted together, the common detecting in the nighttime mode being achieved by connecting the lamp currents (I1, I2) together.

## Revendications

1. Système de commande pour au moins deux tubes fluorescents (6, 7) raccordés à un circuit de transformateur (5) commun, le système de commande (2) comportant au moins :
un circuit de commande (3) avec au moins deux entrées de détection (a2, a3),
chaque entrée de détection (a2, a3) étant prévue en mode jour pour détecter le courant de lampe d'un tube fluorescent raccordé, les courants de lampe (I1, I2) étant réglables par le circuit de commande (3) avec une intensité plus élevée en mode jour et avec une intensité plus faible en mode nuit,
les courants de lampe (I1, I2) pouvant être détectés séparément l'un de l'autre en mode jour,
**caractérisé en ce que** les courants de lampe (I1, I2) peuvent être détectés conjointement en mode nuit, la détection conjointe en mode nuit étant possible par le fait que les courants de lampe (I1, I2) peuvent être interconnectés par des moyens de commutation (4).

2. Système de commande selon la revendication 1, **caractérisé en ce qu'**il est prévu entre les deux entrées de détection (a2, a3) un moyen de commutation (4), par lequel les deux entrées de détection (a2, a3) sont reliées en mode nuit pour une analyse conjointe des deux courants de lampe (I1, I2) par les deux entrées de détection et sont séparées en mode jour pour une analyse séparée de chaque courant de lampe par une entrée de détection.

3. Système de commande selon la revendication 1 ou 2, **caractérisé en ce que** le circuit de commande (3) diminue un courant de lampe (I1, I2) en cas de détection d'une valeur inférieure à une valeur de courant minimum et introduit un mode continu pour introduire une activation.

4. Système de commande selon l'une des revendications précédentes, **caractérisé en ce que** le circuit de commande (3) est intégré.

5. Circuit d'excitation pour au moins deux tubes fluorescents (6, 7), comportant un système de commande (2) selon l'une des revendications précédentes, pour raccorder à des premiers contacts d'alimentation (8, 10) des tubes fluorescents, deux impédances, de préférence des condensateurs (CL12, CL13), qui peuvent être raccordés à des deuxièmes contacts d'alimentation (9, 11) des tubes fluorescents (6, 7) pour former des circuits potentiométriques, et un circuit de transformateur (5), qui est relié aux impédances par l'intermédiaire d'un ligne de raccordement (14) commune.

6. Circuit de lampes (1) comportant un circuit d'excitation (2, 5, CL12, CL13) selon la revendication 5 et deux tubes fluorescents (6, 7) raccordés.

7. Procédé de fonctionnement d'un circuit de lampes selon la revendication 6, les courants de lampe (I1, I2) circulant à travers les tubes fluorescents (6, 7) étant détectés et réglés séparément en mode jour, **caractérisé en ce que** les courants de lampe sont détectés et réglés conjointement en mode nuit, la détection conjointe en mode nuit étant possible par le fait que les courants de lampe (I1, I2) sont interconnectés.
